# EUROPÄISCHE PATENTANMELDUNG

(11) **EP 1 538 062 A1**
(43) Veröffentlichungstag der Anmeldung: **08.06.2005**
(21) Anmeldenummer: 03027640.6
(22) Anmeldetag: 02.12.2003
(51) Int. Cl.: B62B 7/08

(54) **Zusammenklappbarer Kinderwagen**

(71) Anmelder: Haeggberg, Christian, 9602 Bazenheid (CH)
(72) Erfinder: Haeggberg, Christian, 9602 Bazenheid (CH)
(74) Vertreter: Müller, Christoph Emanuel

(57) **Zusammenfassung**

Zusammenklappbarer Kinderwagen mit einem Sitzelement (1), einer Rückenlehne (2), einer ersten Halterung (3) für mindestens ein Vorderrad (5), einer zweiten Halterung (4) für mindestens zwei Hinterräder (6) und einer Schiebevorrichtung (8) und einer Klappvorrichtung (7). Das Sitzelement (1), die Rückenlehne (2) sowie die erste (3) und die zweite Halterung (4) sind jeweils einseitig und um diese schwenkbar an der Klappvorrichtung (7) befestigt. Die Klappvorrichtung (7) weist Drehgelenke zum Verschwenken des Sitzelements (1), der Rückenlehne (2) sowie der ersten (3) und zweiten Halterung (4) auf.

## Beschreibung

### Zusammenklappbarer Kinderwagen

Die Vorrichtung betrifft einen zusammenklappbaren Kinderwagen mit einer aus Drehgelenken bestehenden Klappvorrichtung gemäss dem unabhängigen Patentanspruch.

Zusammenklappbare Kinderwagen sind Platz sparend aufbewahrbar und transportierbar und bieten deshalb eine sinnvolle Alternative zu starren Kinderwagen. Eine Vielzahl von zusammenklappbaren Kinderwagen ist bereits bekannt. Der Klappmechanismus ist bei den meisten als Schermechanismus ausgebildet. Ein Beispiel für so einen Kinderwagen ist in EP 0 908 730 offenbart. Schermechanismen haben aber den Nachteil, dass die Länge des Kinderwagens beim zusammenklappen nicht verkleinert wird. Insbesondere, wenn der Kinderwagen als Fluggepäck mitgenommen werden soll, ist das ein Problem. Ausserdem sind die Winkel zwischen den Schergelenken aneinander gekoppelt, so dass nicht beliebige Einstellungen zwischen der Sitzfläche, der Rückenlehne und den Halterungen für die Vorder- und Hinterräder möglich sind.

Aus DE 196 54 569 ist ein zusammenklappbarer Kinderwagen bekannt, bei dem die Neigung der Rückenlehne verstellt werden kann, ohne dass die Neigung der Sitzfläche verändert wird. Die Klappmechanik dieses Kinderwagens ist aber aufwendig und weist den gleichen Nachteil auf, wie übliche Schermechaniken: Die Länge des Kinderwagens im zusammengeklappten Zustand ist nicht kleiner als im Betriebszustand.

Die ist die Aufgabe der Erfindung, einen zusammenklappbaren Kinderwagen zu schaffen, der die Nachteile des Bekannten vermeidet, der sich insbesondere klein zusammenlegen lässt, vorzugsweise als Handgepäck im Flugzeug oder Platz sparend im Auto mitgenommen werden kann und dennoch für das Kind individuell einstellbar ist und sich zudem durch einfache Herstellung und Handhabung auszeichnet.

Diese Aufgabe wird mit einem Kinderwagen mit einer aus Drehgelenken bestehenden Klappmechanik gemäss dem unabhängigen Patentanspruch gelöst.

Der Kinderwagen besteht aus einem Sitzelement, einer Rückenlehne, einer ersten Halterung für mindestens ein Vorderrad und einer zweiten Halterung für mindestens zwei Hinterräder und einer Schiebevorrichtung. Weiter weist er eine Klappmechanik auf, an der das Sitzelement, die Rückenlehne sowie die erste und die zweite Halterung jeweils einseitig befestigt sind. Alle Elemente sind so an der Klappmechanik befestigt, dass sie um diese geschwenkt werden können, wobei die Klappmechanik Drehgelenke zum stufenlosen Verschwenken der einzelnen Elemente aufweist.

Zur Herstellung des Kinderwagens können verschiedene Materialien in verschiedenen Kombinationen verwendet werden. Insbesondere verstärkte Kunststoffe, z.B. mit stabilisierender Verrippung bzw. Gasinjektion oder mit Glasfaserfüllung, gezogene oder geschweisste Aluminium- oder Stahlprofile und Schaumstoffkissen mit Stoff- oder Kunstfaserüberzügen eignen sich zur Herstellung eines kinderfreundlichen Produkts.

Die Rückenlehne kann als Schale aus Kunststoff mit einem Stoffüberzug ausgebildet sein. Vorteilhaft ist jedoch eine Rükkenlehne, bei der nur der Rahmen aus starrem Material geformt ist. Der Stoffbezug kann an diesem Rahmen befestigt werden und bildet die eigentliche Lehne. Dadurch kann der Wagen flacher zusammengeklappt werden. Ausserdem kann der Stoffüberzug mit Hilfe von Reiss- oder Klettverschlüssen oder Druckknöpfen in der Tiefe verstellbar gefertigt sein.

Die Halterungen für die Vorder- und die Hinterräder können ebenfalls nur als Rahmen oder als starre Schale ausgebildet sein.

Vorzugsweise hat der Kinderwagen genau zwei Vorder- und zwei Hinterräder. Vorteilhaft ist des weiteren, wenn zumindest die Vorderräder frei drehbar befestigt sind, was das Lenken des Wagens vereinfacht.

Die Klappvorrichtung weist zwei grundsätzliche Positionen auf. In der ersten Position befindet sich der Kinderwagen in einer Betriebsstellung, in der zweiten Position ist er zusammengeklappt.

In der zusammengeklappten Position sind das Sitzelement, die Rückenlehne sowie die erste und zweite Halterung vorzugsweise etwa parallel zueinander von der Klappvorrichtung abstehend angeordnet. Somit ist der Kinderwagen in der zusammengeklappten Position nur etwa halb so lang wie in der Betriebsposition. Durch die höchstmöglich parallele Anordnung der einzelnen Elemente ist der Kinderwagen in der zusammengeklappten Position ausserdem sehr kompakt, relativ flach und deshalb platzsparend verstaubar.

In der Betriebsstellung sind die Elemente ungefähr sternförmig um die Klappvorrichtung herum angeordnet. Vorzugsweise lassen sich die Winkel zwischen den einzelnen Elementen frei einstellen und die Sitz- und Lehnenneigung individuell anpassen. Es ist aber auch denkbar, dass jedes der Elemente einzeln zwischen einer vorgegebenen Anzahl von Positionen verstellen lässt und die Winkel dadurch stufenweise variierbar sind.

In einer bevorzugten Ausführungsform sind die Drehgelenke des Sitzelements, der Rückenlehne sowie der ersten und zweiten Halterung auf einer Drehachse fluchtend angeordnet. Diese Drehachse ist nicht zwingend durchgehend auszubilden, sie kann auch als geometrisches Produkt mehrerer Achsen von einzelnen Drehgelenken bestehen.

In einer anderen bevorzugten Ausführungsform sind die Drehgelenke der verschiedenen Elemente auf zwei Drehachsen fluchtend angeordnet. Diese Ausführungsform ist besonders vorteilhaft, weil die Elemente in der zusammengeklappten Position so beinahe perfekt parallel gegeneinander ausgerichtet werden können. Eine Ausführung, bei der die Elemente auf drei Drehachsen fluchten, ist ebenfalls denkbar.
Bevorzugter Weise ist eine Fussstütze an der ersten Halterung angebracht. Dies erhöht den Komfort und die Sicherheit für das Kind.

Die Schiebevorrichtung kann an der Rückenlehne befestigt sein. Ebenso ist es denkbar, dass sie direkt an der Klappvorrichtung befestigt ist und ebenfalls um diese geschwenkt werden kann. Vorteilhaft ist es, wenn die Schiebevorrichtung in ihrer Länge verändert werden kann, z.B. indem sie an Schienen oder an teleskopartig ineinander greifenden Rohren befestigt ist. Alternativ kann die Vorrichtung auch um bis zu 180° schwenkbar an der Rükkenlehne angebracht sein. Das Schwenken und/oder die Längenregulierung erleichtern verschieden grossen Personen, den Wagen bequem zu schieben.

In einer möglichen Ausführungsform sind die Elemente in der zusammengeklappten Position so angeordnet, dass die Unterseite des Sitzelementes und die Halterung der Vorderräder die Aussenseiten des Wagens bilden. Vorteilhaft ist daran, dass die Sitzfläche und die Innenseite der Rückenlehne Umwelteinflüssen nicht so stark ausgesetzt sind und eher sauber bleiben. Besonders vorteilhaft ist es dazu, wenn das Sitzelement eine ausklappbare oder ausfahrbare Verlängerung besitzt, so dass die Länge der Sitzfläche im ausgeklappten oder ausgefahrenen Zustand der Länge der Rückenlehne entspricht. Damit sind beide Flächen über ihre ganze Ausdehnung hinweg geschützt.

Besonders vorteilhaft lässt sich der Kinderwagen in Betriebsstellung zwischen einer Liegeposition und einer Sitzposition einstellen. Die Sitzposition entspricht der oben erwähnten ungefähr sternförmigen Anordnung der einzelnen Elemente. In der Liegeposition kann die Rückenlehne bis in eine ca. waagrechte Position gebracht. Die Verlängerung des Sitzes wird ausgeschwenkt oder ausgezogen und dient als zusätzliche Fussstütze für das liegende Kind. Insbesondere kann diese Verlängerung mit einem fixen oder ausklappbaren Anschlag versehen sein, der die Füsse des Kindes nach unten stabilisiert.

Vorzugsweise ist an mindestens einem der Elemente seitlich zumindest ein Traggriff angebracht, was den Transport des zusammengeklappten Wagens weiter vereinfacht.

Besonders flach lässt sich der Wagen zusammenlegen, wenn die Vorder- und/oder Hinterräder des Wagens um ca. 90° gegen den Wagen schwenkbar angebracht sind. Dies ist insbesondere dann von Vorteil, wenn die Räder einen grossen Durchmesser haben.

Die Vorder- und/oder Hinterräder können so angeordnet sein, dass sie in der zusammengeklappten Position über die restlichen Elemente hinausragen. Beim Transport des Wagens können sie so zum Ziehen oder Stossen des Wagens verwenden werden.

Zum Schutz des Kinderwagens in der zusammengeklappten Position gegen Staub, Schmutz, Feuchtigkeit oder Beschädigung können Schutzüberzüge mitgeliefert werden. Diese sollten sinnvoller Weise mindestens die Ecken überdecken, da diese am stärksten gegen Stösse ausgesetzt sind. Die Schutzüberzüge können auch den ganzen Wagen umschliessen, was sich dann eignet, wenn er längere Zeit gelagert werden sollte. Für den Transport sind Schutzüberzüge vorteilhafter, die zumindest einen Traggriff freilassen.
Für schwerere Wagen ist es vorteilhaft, dass die Vorderund/oder Hinterräder sowie die Schiebevorrichtung vom Schutzüberzug ausgenommen sind, so dass der Wagen als Trolleykoffer gezogen oder gestossen werden kann.

Im folgenden wird die Erfindung anhand von Abbildungen und verschiedenen Ausführungsbeispielen genauer erläutert. Die Abbildungen zeigen hierbei:
- Fig. 1a:: einen erfindungsgemässen Kinderwagen in der Betriebsstellung,
- Fig. 1b:: eine alternative Ausführungsform eines erfindungsgemässen Kinderwagens in Betriebsstellung,
- Fig. 2a, 2b:: einen Kinderwagen gemäss Fig. 1a in der zusammengeklappten Position in zwei Ansichten,
- Fig. 2c:: einen Kinderwagen gemäss Fig. 1b in der zusammengeklappten Position,
- Fig. 3:: einen zusammengeklappten Kinderwagen mit Schutzüberzügen an den Ecken,
- Fig. 4:: einen zusammengeklappten Kinderwagen gemäss Fig. 1a mit einem Schutzüberzug, als Trolley-Koffer ziehbar
- Fig. 5:: eine schematische Darstellung des Umklappens des Kinderwagens aus der Betriebsposition in die zusammengeklappte Position, und
- Fig. 6:: eine Teilansicht der Klappvorrichtung

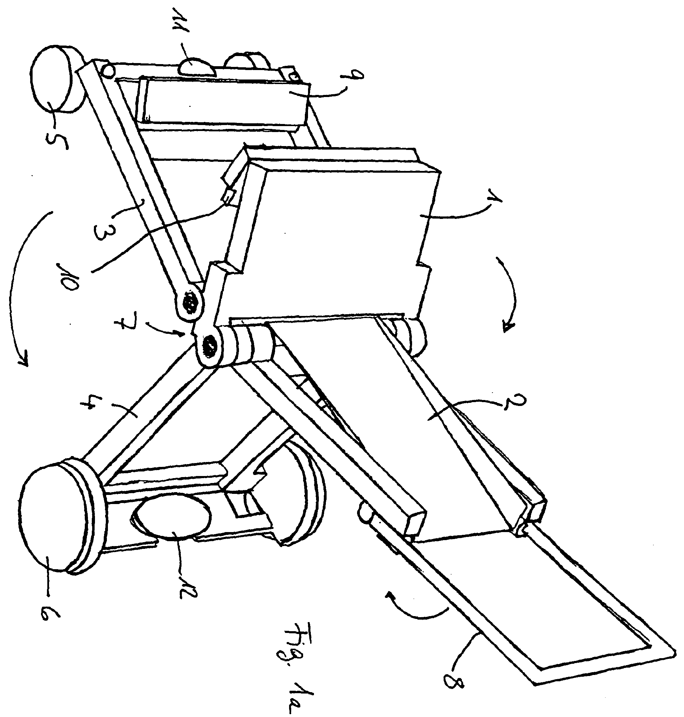

In Fig. 1a ist der zusammenklappbare Kinderwagen in Betriebsstellung dargestellt. Das Sitzelement 1, die Rückenlehne 2, die erste Halterung 3 für die Vorderräder 5 und die zweite Halterung 4 für die Hinterräder 6 sind ungefähr sternförmig um die Klappvorrichtung 7 angeordnet. Die Schiebevorrichtung8 ist an der Rückenlehne 2 befestigt. An der ersten Halterung 3 ist eine Fussstütze 9 für die Sicherheit und den Komfort des Kindes angebracht. Zum Zusammenklappen kann diese Fussstütze eingeklappt werden. Am Sitzelement 1 ist eine ausklappbare Verlängerung 10 angebracht, die in der zusammengeklappten Position des Kinderwagens aufgeklappt wird. Wird der Kinderwagen in eine Liegeposition gebracht, dient die Verlängerung als Fussstütze für das Kind. An der ersten Halterung 3 ist ein Verschluss 11 angebracht, der in den Wagen in der zusammengeklappten Position fixiert. An der zweiten Halterung 4 ist ausserdem eine Bremse 12 befestigt, mit welcher die Hinterräder des Wagens blockiert werden. Alternativ kann die Bremse 12 über Seilzüge mit Griffen (nicht dargestellt) an der Schiebevorrichtung 8 befestigt sein und mit den Händen bedient werden.
Mit den Pfeilen sind die Bewegungen der einzelnen Elemente beim Verstellen angedeutet.

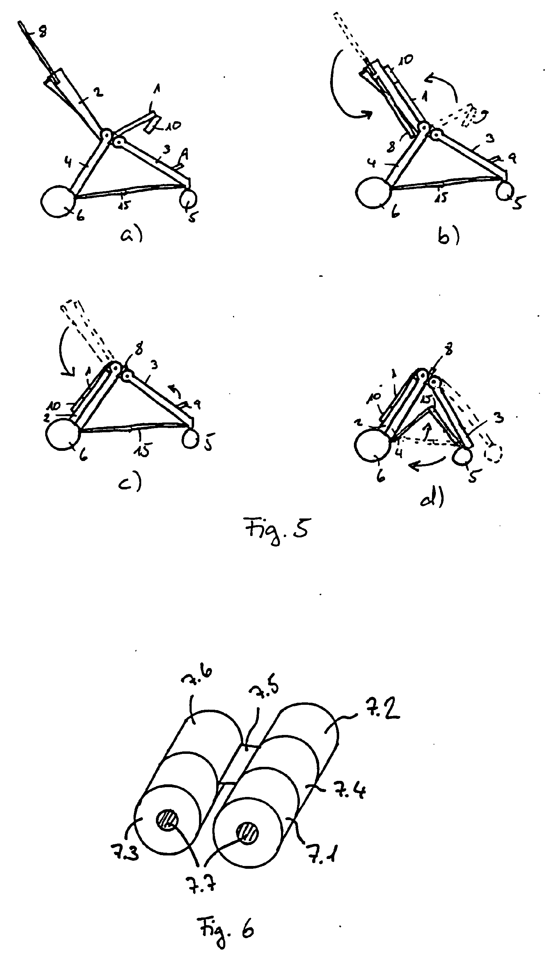

Die Räder oder die Halterungen des Wagens können über Federn gelagert sein, die beim Fahren wegen Unebenheiten im Weg vorkommende Stösse auffangen. Ausserdem können die beiden Halterungen 3 und 4 mit Querverbindungen 15 (in Fig. 5 ersichtlich) verbunden sein, was den Wagen stabilisiert und gegen unerwünschtes Zusammenklappen schützt. Dies ist insbesondere auf unebenen Wegen oder beim überqueren von Strassen mit Randsteinen von Vorteil. An diesen Querverbindungen 15 kann ein Transportnetz (nicht dargestellt) befestigt werden.

An der Rückenlehne 3 oder an der Schiebevorrichtung 8 kann ein Sonnen- und/oder Regenschirm (nicht dargestellt) befestigt sein, der vorzugsweise fächerartig aufgeklappt werden kann. Zudem kann aus Sicherheitsgründen ein Gurtsystem (nicht dargestellt) an der Rückenlehne 2 und am Sitzelement 1 befestigt sein, mit dem das Kind während dem Fahren im Wagen gesichert wird.

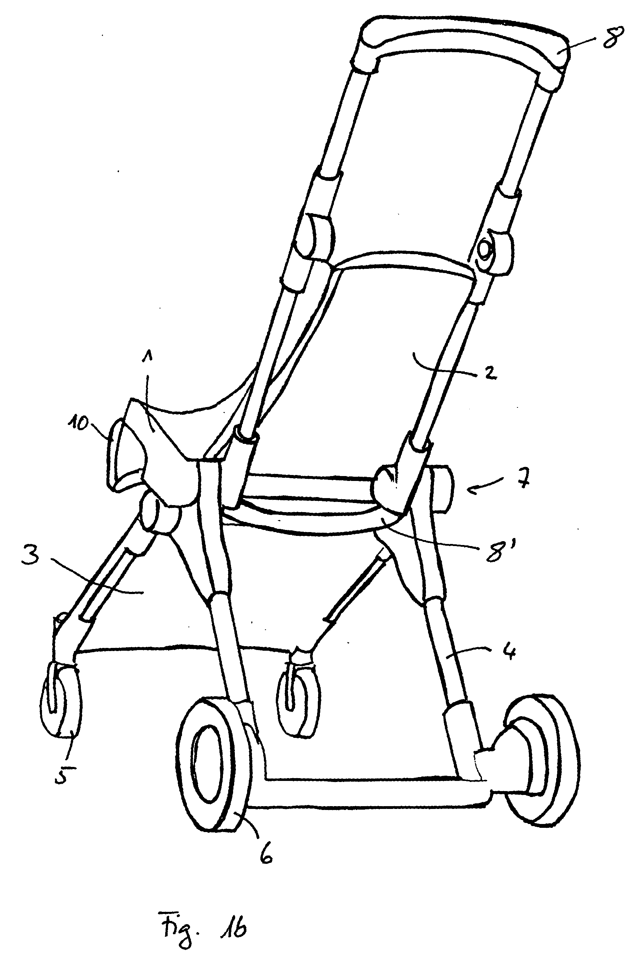

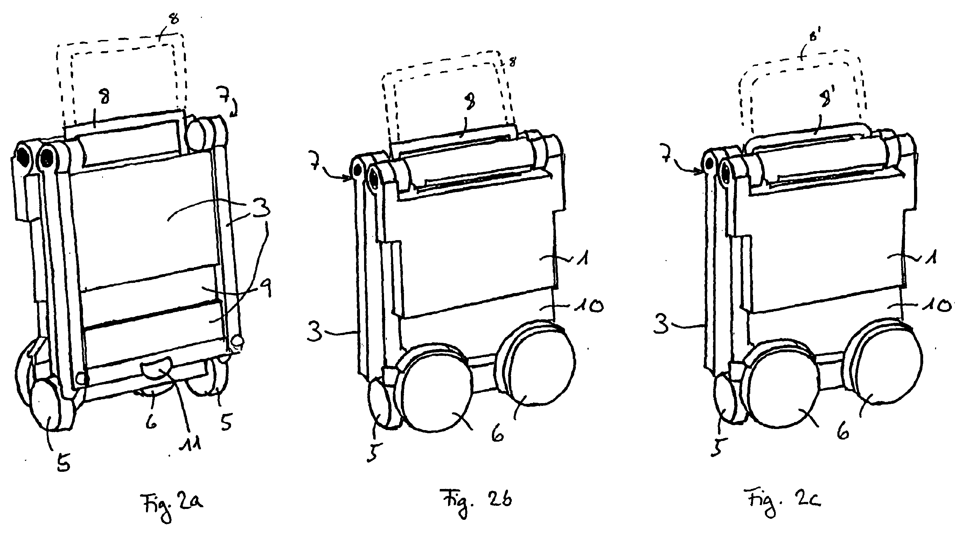

In den Fig. 2a und 2b sind zwei Ansichten des Kinderwagens gemäss Abb. 1a in der zusammengeklappten Position dargestellt. In dieser Ausführung bilden das Sitzelement 1 und die erste Halterung 3 die Aussenseiten des Kinderwagens. Die Halterung 3 ist dazu als verstärkte Schale ausgebildet, so dass der Kinderwagen im zusammengeklappten Zustand stabile Aussenseiten hat. Die Hinterräder 6 befinden sich in Radkappen, die um 90° gegen den Wagen geklappt werden. Die Fussstütze 9 ist drehbar gelagert und wird im zusammengeklappten Zustand gegen den Wagen gedreht. Dadurch ist der gesamte Wagen sehr kompakt und stabil. Der Verschluss 11 verhindert, dass der Wagen sich unerwünschter Weise öffnet. In dieser Ausführungsform ist die Schiebevorrichtung 8 derart drehbar an der Rückenlehne 2 befestigt, dass sie beim Zusammenklappen um 180° gegen die Lehne gedreht wird und sich zum Tragen des Wagens eignet. Die Vorderräder 5 stehen in der zusammengeklappten Position über die übrigen Elemente heraus. Der Wagen kann also auch in der zusammengeklappten Position geschoben oder gezogen werden. Dies ist besonders dann einfach realisierbar, wenn die Schiebevorrichtung 8 in ihrer Länge verstellbar ist. Dies ist mit gepunkteten Linien angedeutet.

Wie in Fig. 1b dargestellt, kann die Schiebevorrichtung 8 zusätzlich mit einem Gegenstück 8' am unteren Ende ausgestattet sein. Im zusammengeklappten Zustand kann dieses Gegenstück 8' zum Tragen oder auch zum Schieben bzw. Ziehen des Wagens dienen. Das Gegenstück 8' kann analog zur Schiebevorrichtung 8 teleskopartig ausziehbar gestaltet sein, was beim Schieben oder Ziehen des Wagens im zusammengeklappten Zustand vorteilhaft ist (siehe Fig. 2c).

Bei der Ausführungsform gemäss Fig. 1b übernimmt das Gegenstück 8' im zusammengeklappten Zustand die Funktion der Schiebevorrichtung 8, was in Fig. 2c dargestellt ist. Das teleskopartige Ausziehen des Gegenstücks 8' zum Schieben oder Ziehen des Wagens ist mit gepunkteten Linien angedeutet. Die Schiebevorrichtung 8 kann eingeklappt oder eingefahren werden und ist in Fig. 2c nicht sichtbar. Analog zur Ausführungsform gemäss Fig. 1a bilden auch bei diesem Kinderwagen das Sitzelement 1 und die Halterung 3 die Aussenseiten des Kinderwagens im zusammengeklappten Zustand.

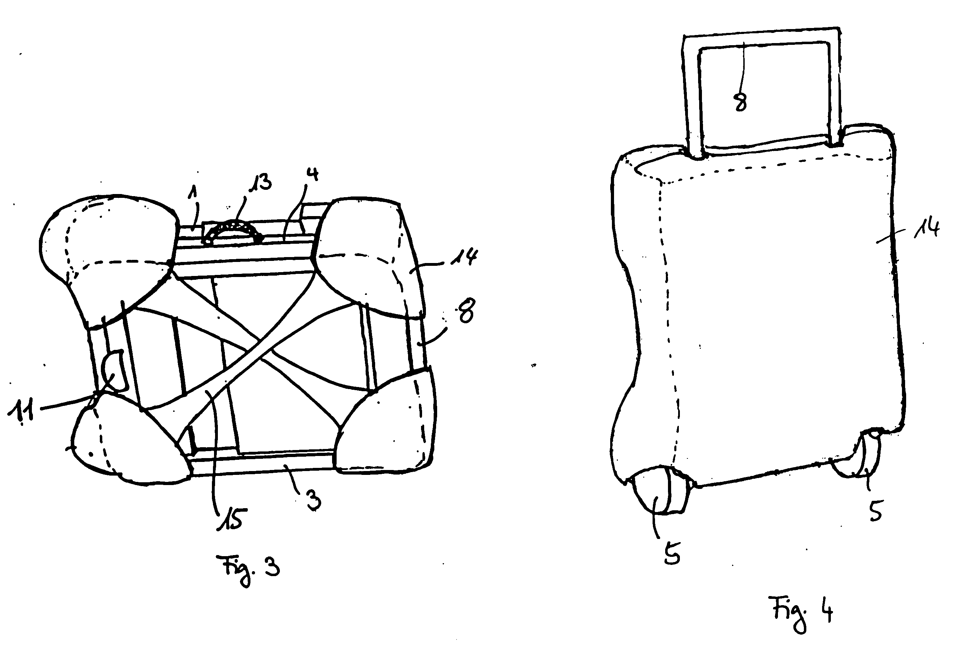

In Fig. 3 ist eine mögliche Ausführungsform für Schutzüberzüge 14 zu sehen. Die Schutzüberzüge 14 bestehen aus einem weichen, vorzugsweise wasserdichten Material wie Kunstfasern und können inwendig mit Schaumstoff gepolstert sein. Je zwei diagonal gegenüber liegende Schutzüberzüge 14 sind mit einem Gummizug 15 verbunden, was ein einfaches und stabiles Anbringen der Überzüge 14 ermöglicht. In dieser Ausführungsform des Kinderwagens ist ausserdem an der zweiten Halterung 4 ein Traggriff 3 befestigt, an welchem der Wagen im zusammengelappten Zustand einfach transportiert werden kann.

In Fig. 4 ist der Wagen im zusammengeklappten Zustand wie ein Trolley-Koffer schieb- oder ziehbar. Der Schutzüberzug 15 hat Öffnungen für die Vorderräder 5 und die Schiebevorrichtung 8. Zum Verpacken des Kinderwagens in den Schutzüberzug 14 kann dieser mit einem Reiss- oder Klettverschluss (nicht dargestellt) geöffnet werden. Dieser Schutzüberzug 14 ist vorzugsweise aus einem stabilen Stoff gefertigt.

Am Kinderwagen kann eine Falttasche (nicht dargestellt) befestigt sein, z.B. an der Halterung 3 für die Vorderräder. In dieser Falttasche kann der Schutzüberzug verstaut werden, alternativ können dort auch Spielsachen, Windeln oder andere Gegenstände mitgeführt werden.

Wie der Kinderwagen zusammengeklappt wird, ist aus Fig. 5 ersichtlich. In Teilabbildung a) befindet sich der Wagen in der Betriebsposition. In Teilabb. b) wurde die Verlängerung 10 des Sitzelements 1 hochgeklappt und das Sitzelement 1 gegen die Rükkenlehne 2 geklappt. Die Schiebevorrichtung 8 wurde um 180° gegen die Rückenlehne 2 geschwenkt. In Teilabb. c) wurden Rückenlehne 2 und Sitzelement 1 gegen die Halterung 4 geklappt. Die Fussstütze 9 wird in die Halterung 3 eingeklappt. In Teilabbildung d) werden die beiden Halterungen 3 und 4 gegeneinander geklappt. Dazu muss die Querverstrebung 15 ebenfalls hochgeklappt werden.

Fig. 6 ist eine schematische Darstellung eines Teils der Klappvorrichtung 7. Am Wagen sind zwei derartige, gegeneinander gespiegelte Anordnungen an der gleichen geometrischen Achse angeordnet.

An den beiden parallelen Walzen 7.7 sind die Wagenelemente befestigt. Die Sitzfläche 1 ist mit der Walze 7.1, die Rückenlehne 2 mit der Walze 7.2 und die erste Halterung 3 mit der Walze 7.3 verbunden. Die zweite Halterung 4 ist mit der Walze 7.4 verbunden, die ihrerseits über die Brücke 7.5 mit der Walze 7.6 verbunden ist. Über die Brücke 7.5 werden die beiden zentralen Walzen 7.7 also gegeneinander in Position gehalten.

Die Arretierung der einzelnen Walzen kann unterschiedlich ausgeprägt sein. In einer bevorzugten Ausführungsform sind die beiden Walzen 7.4 und 7.6 an den Walzen 7.7 fixiert. Die übrigen Walzen sind drehbar an den Walzen 7.7 gelagert und können mit Hilfe von Bremsen fixiert werden. Bevorzugt sind Bremsen in Form von gegeneinander drehbaren Bremsbacken innerhalb der drehenden Walzen. Diese können über eine Feder arretiert werden, die über Druckknöpfe in den Naben der Walzen 7.7 gespannt werden.

Als Bremsen können auch verschiedene Formen von Trommelbremsen eingesetzt werden. Insbesondere ist es denkbar, dass die Walzen 7.7 zugleich die Bremsbacken der Trommelbremse sind und über eine kegelförmige Schraube an die Innenwand der festzustellenden Walze gedrückt werden. Da zum Drehen der Schrauben Kraft aufgewendet werden muss, ist zugleich gewährleistet, dass ein Kind die Bremsen nicht lösen kann.

Ebenso ist es denkbar, dass die Arretierung mit einer Stiftbremse geschieht, wobei Stifte durch Löcher in den Walzen 7.7 gegen die Innenwand der festzustellende Walze gedrückt werden. Dabei kann die Arretierwirkung verbessert werden, wenn die Innenwände der Walzen mit Einbuchtungen versehen sind, in welche die Stifte passen. Allerdings sind die einzelnen Elemente so nicht kontinuierlich gegeneinander verstellbar. Die Stifte können über eine Federmechanik mit einem Druckknopf verbunden sein, der in den Naben der Walzen 7.7 angebracht ist.

Anstelle von Bremsen in den Walzen, kann die Arretierung auch ausserhalb der Walzen stattfinden. Zum Beispiel ist es möglich, die Halterungen 3,4 mit Querstangen derart zu verbinden, dass die Querstangen an einer Halterung drehbar und an der anderen Halterung über ein Zahnprofil lösbar befestigt sind. Auf die gleiche Art können auch das Sitzelement 1 und die Rückenlehne 2 verbunden werden, wobei diese Querstangen dann zugleich als Armstützen dienen können. Auch diese Form der Arretierung lässt keine kontinuierliche Einstellung der Winkel zwischen den einzelnen Elementen zu. Je nach der Anzahl der Zähne im Profil können aber verschiedene Winkel eingestellt werden.

## Patentansprüche

1. Zusammenklappbarer Kinderwagen mit einem Sitzelement (1), einer Rückenlehne (2), einer ersten Halterung (3) für mindestens ein Vorderrad (5), einer zweiten Halterung (4) für mindestens zwei Hinterräder (6) und einer Schiebevorrichtung (8) und einer Klappvorrichtung (7),
**dadurch gekennzeichnet, dass** das Sitzelement (1), die Rückenlehne (2) sowie die erste (3) und die zweite Halterung (4) jeweils einseitig und um diese schwenkbar an der Klappvorrichtung (7) befestigt sind,
dass die Klappvorrichtung (7) Drehgelenke zum Verschwenken des Sitzelements (1), der Rückenlehne (2) sowie der ersten (3) und zweiten Halterung (4) aufweist, und
dass die Klappvorrichtung (7) eine erste Position aufweist, welche der Betriebsstellung des Kinderwagens entspricht, und eine zweite Position, in welcher der Kinderwagen zusammengeklappt ist.

2. Kinderwagen nach einem der Ansprüche 1, **dadurch gekennzeichnet, dass** in der zusammengeklappten Position das Sitzelement (1), die Rückenlehne (2) sowie die erste (3) und zweite Halterung (4) etwa parallel zueinander von der Klappvorrichtung (7) abstehend angeordnet sind.

3. Kinderwagen nach einem der Ansprüche 1 oder 2, **dadurch gekennzeichnet, dass** das Sitzelement (1), die Rückenlehne (2) sowie die erste (3) und zweite Halterung (4) in der Betriebsstellung etwa sternförmig um die Klappvorrichtung (7) herum angeordnet sind.

4. Kinderwagen nach einem der Ansprüche 1 bis 3, **dadurch gekennzeichnet, dass** in der Betriebsstellung die Winkel zwischen dem Sitzelement (1), der Rückenlehne (2) und der ersten (3) und zweiten Halterung (4) stufenlos fixierbar oder zwischen einer vorgegebenen Anzahl von Positionen wählbar sind.

5. Kinderwagen nach einem der Ansprüche 1 bis 4, **dadurch gekennzeichnet, dass** die Drehgelenke des Sitzelements (1), der Rükkenlehne (2) sowie der ersten (3) und zweiten Halterung (4) auf einer Drehachse fluchtend angeordnet sind.

6. Kinderwagen nach einem der Ansprüche 1 bis 4, **dadurch gekennzeichnet, dass** die Drehgelenke des Sitzelements (1), der Rükkenlehne (2) sowie der ersten (3) und zweiten Halterung (4) auf zwei oder drei parallel verlaufenden Drehachsen fluchtend angeordnet sind.

7. Kinderwagen nach einem der Anspüche 1 bis 6, **dadurch gekennzeichnet, dass** an der ersten Halterung (3) eine Fussstütze (9) angebracht ist.

8. Kinderwagen nach einem der Ansprüche 1 bis 7, **dadurch gekennzeichnet, dass** die Schiebevorrichtung(8) an der Rückenlehne (2) befestigt ist.

9. Kinderwagen nach einem der Ansprüche 1 bis 7, **dadurch gekennzeichnet, dass** die Schiebevorrichtung(8) schwenkbar an der Klappvorrichtung (7) befestigt ist.

10. Kinderwagen nach einem der Ansprüche 1 bis 9, **dadurch gekennzeichnet, dass** die Schiebevorrichtung(8) in der Länge verstellbar ist.

11. Kinderwagen nach einem der Ansprüche 1 bis 10, **dadurch gekennzeichnet, dass** in der zusammengeklappten Position die Unterfläche des Sitzelements (1) und erste Halterung (3) die Aussenseiten des Wagens sind.

12. Kinderwagen nach Anspruch 11, **dadurch gekennzeichnet, dass** das Sitzelement (1) eine aufklappbare oder ausfahrbare Verlängerung (10) besitzt.

13. Kinderwagen nach einem der Ansprüche 1 bis 12, **dadurch gekennzeichnet, dass** seitlich am Sitzelement (1), an der Rückenlehne (2) oder an einer der Halterungen (3,4) mindestens ein Traggriff (13) zum Tragen des Wagens in der zusammengeklappten Position befestigt ist.

14. Kinderwagen nach einem der Ansprüche 1 bis 13, **dadurch gekennzeichnet, dass** die Vorder- (5) und/oder Hinterräder (6) um etwa 90° gegen den Wagen schwenkbar sind.

15. Kinderwagen nach einem der Ansprüche 1 bis 14, **dadurch gekennzeichnet, dass** die Vorder- (5) und/oder Hinterräder (6) des Wagens in der zusammengeklappten Position über die restlichen Elemente hinausragend angeordnet und zum Ziehen oder Stossen des Wagens verwendbar sind.

16. Kinderwagen nach einem der Ansprüche 1 bis 15, **dadurch gekennzeichnet, dass** für den Wagen in der zusammengeklappten Position Schutzüberzüge (14) vorgesehen sind.
